# EUROPEAN PATENT SPECIFICATION

(11) **EP 0 558 282 B1**
(45) Date of publication and mention of the grant of the patent: **11.11.1998**
(21) Application number: 93301345.0
(22) Date of filing: 24.02.1993
(51) Int. Cl.: F16C 33/04, B32B 15/08

(54) **Composite bearing material and method for producing**
Zusammengesetztes Lagermaterial und Verfahren zur Herstellung
Matière de palier composé et procédé de fabrication

(30) Priority: 26.02.1992 JP 39325/92
(43) Date of publication of application: 01.09.1993
(73) Proprietor: YANAGAWA SEIKO Co. Ltd., Ota-ku, Tokyo (JP)
(72) Inventor: Yanagawa, Chuichi, Ota-ku, Tokyo (JP)
(74) Representative: Murgitroyd, Ian G.

(56) References cited:
- EP-A- 58 264
- EP-A- 0 492 561
- CH-A- 529 940
- DE-A- 1 575 362
- SU-A- 1 055 913
- US-A- 3 197 975
- US-A- 3 268 280
- US-A- 3 545 900
- US-A- 4 509 870
- US-A- 4 512 290
- PATENT ABSTRACTS OF JAPAN, unexamined applications, M section, vol. 4, no. 167, November 19, 1980 THE PATENT OFFICE JAPANESE GOVERNMENT page 57 M 42 & JP-A-55 115 623 ( ARAI PUMP MFG CO LTD ) 5 September 1980
- PATENT ABSTRACTS OF JAPAN, unexamined applications, M section, vol. 13, no. 300, July 11, 1989 THE PATENT OFFICE JAPANESE GOVERNMENT page 147 M 848 & JP-A-1 093 619 ( TSHUBAKIMOTO CHAIN CO ) 12 April 1989
- W. Ludeck, Handbuch der Kleb-, Giess- und Laminiertechnik, VEB Deutscher Verlag für Grundstoffindustrie, Leipzig, 1979, pages 154 - 159

## Description

### Technical Field

This invention relates to composite material obtained from different materials in a two-layer construction and method for producing the same, in particular composite material suitable for making non-lubricant bearings having relative small diameter consisting of metal plate covered with fluororesin on its inner side surface.

### Background of the invention

In general, in rotary parts and sliding parts of various equipments having small sizes, such as tape-recorder, video player and the like, frequent use is made of non-lubricant bearings called "dry-bearings" which do not contain lubricant, due to the absence of contamination caused by lubricant, the simplicity of their construction and other reasons. In particular, non-lubricant bearings using a suitable bearing member; for instance, fluororesin at their rotary or sliding members are preferred owing to the low friction coefficient of the materials used, i.e. fluororesin.

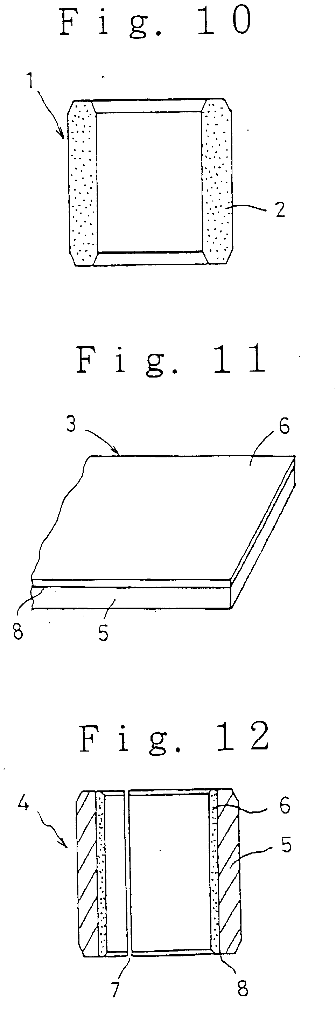

Fig. 10 is a cross-sectional view of a heretofore known non-lubricant bearing 1. This non-lubricant bearing 1 comprises a round bar or pipe shaped member 2 of polytetrafluoroethylene (called hereinbelow PTFE) having low friction coefficient, said member being machined into a substantially cylindrical form of determined sizes and shape. Such non-lubricant bearing 1 must have an increased wall-thickness due to the low mechanical strength of PTFE forming said member 2, so that these bearing 1 requires for example a thickness more than 1.5 mm of wall-thickness for 3 mm of inner diameter thereof. Therefore, non-lubricant bearing 1 of larger diameter requires more quantity of PTFE of higher price, which increases the manufacturing cost thereof. When using the bearings at high PV values, deformation of the mass of PTFE becomes larger due to the large wall-thickness thereof. Further, heat generated from the relative movements between said non-lubricant bearing 1 and members such as shaft mounted therein is accumulated within the mass of PTFE, said heat causing a thermal expansion of said bearing 1, so that a large clearance between non-lubricant bearing 1 and corresponding shaft has been inevitable.

Further, said heat generated from the relative movements between non-lubricant bearing 1 and corresponding shaft causes the softening of PTFE as well as increase of wear thereof, thereby to shorten the life of non-lubricant bearing 1.

For eliminating the problems as described above, non-lubricant bearing 4 made from composite material 3 as shown in Figs.11 to 13 is used. Such a non-lubricant bearing 4 uses composite material 3 which comprises plane steel plate 5 and a layer or sheet 6 of PTFE adhering to said steel plate 5. Said composite material 3 is then machined or punched into determined sizes and shaped into round form, thereby to obtain a substantially cylindrical form of non-lubricant bearing 4 having a slit 7. In such a non-lubricant bearing 4 made from composite material 3, adhesives of epoxy resins having high thermal resistance and high adhesive property are used for joining PTFE layer 6 onto steel plate 5. However, the joining layer 8 using epoxy resin is separated owing to the low elongation of 1-2 % of epoxy resin used when shaping said composite material 3 into round forms for manufacturing non-lubricant bearing 4 having small radius curvature, i.e. of small diameter.

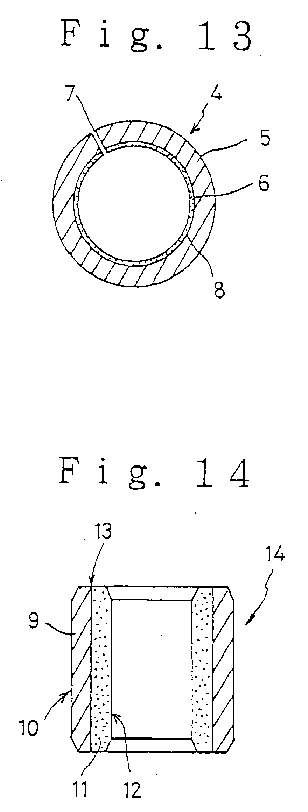

In another type of non-lubricant bearing 14 as shown in Fig.14, inner member 12 of bearing member 11 using fluororesin and the like shaped into cylindrical form with a predetermined interference is fitted into outer member 10 of tube formed from metal materials 9 so as to obtain a composite material 13, which is then machined into determined form of non-lubricant bearing 4. In order to increase the productivity, long lengths of said composite material 13 consisting of said inner member 10 and said outer member 12 of long lengths, for example 2-3 meters, are fed continuously into working machine such as automatic lathe for cutting and other working thereof.

However, said fitting operation of said outer member into said inner member 12 having a predetermined interference has been very difficult except for these members having short lengths and even almost impossible for long lengths of members. Further, adhesives applied on the surface of said members are apt to be separated in the fitting operation.

Accordingly, in other manufacturing process, the outer member 10 is fitted with a play onto the inner member 12 and the assembly thus obtained is subjected to a drawing to produce integral material 13.

However, in this process, a camber of 10mm per 1 m of length of said composite material 13 is generated at said drawing operation. When the resulting composite material 13 having said camber is subjected to a working such as cutting, the one end portion thereof is chucked and rotated, while the other end thereof showing said camber is caused to rotate in an eccentric manner thereby to cause vibration of said composite material 13. The resulting vibration is transferred to the cutting edge, so that a high accuracy of working can not be maintained. For obtaining a higher accuracy, .it is necessary to cut the composite material into short lengths, which cause however a dispersion of quality and an increase of manufacturing cost, so that a higher working techniques and devices are needed.

Further, when the non-lubricant bearings 14 are used as tape-guide roller in the video player and the like, a higher accuracy is needed for manufacturing the same so that is has been hardly possible to use long materials due to the above mentioned reasons, which brings about a more complicated working process and additional economical burden. In addition to such an additional economical burden, the high price of fluororesin used as raw materials increases considerably the cost of non-lubricant bearings thus obtained.As a result, fluororesin can not be used in practice for non-lubricant bearings, so that polyacetal resin has been used in place of fluororesin in many cases. However, when using polyacetal as materials of bearings 11 for example in the mechanism such as video player for business use which rotates in very high velocities, stick slips may be caused with vibration and noises, with the result that the inner member 12 will get out from the outer member 10.

Further there are known journal bearings whereby an inner member is bonded to an outer member by providing an adhesive in the gap between the two members: Examples are e.g. shown in US-A-3 545 900 where a carbon liner is bonded to a steel body, in US-A-4 512 290 where a slide ring is bonded to a crankpin and in SU-A-1 055 913 where three concentric sleeves are bonded together to form a bearing insert.

It is further known that when there is a circumferential gap between two cylindrical members to be bonded these should be fixated while the adhesive is hardening in order to have a uniform gap around the circumference. This can be attained by using separate means to fixate the two members or by constructing the two members such that a fixing rig can be dispensed with.

This is exemplified by the handbook "Handbuch der Kleb-, Gieß- und Laminiertechnik", W. Ludeck, VEB Deutscher Verlag für Grundstoffindustrie, Leipzig, 1979, pages 154 - 159. In this handbook reference is also made to a small gap of the order of 0,05 to 0,15 mm and that preferably a fixing rig should be omitted by providing straight knurling on one of the two parts, thus providing a plurality of projections which have the same height as the size of the gap.

### SUMMARY OF THE INVENTION

It is therefore the essential object of this invention to create reliable composite material having relatively simple construction and consisting of outer member and inner member securely fixed with each other for eliminating the disadvantages of prior techniques as described above and the method for obtaining the same.

The object described above is achieved according to the invention by the cylindrical composite bearing material described in Claim 1 and the methods defined in claims 3 and 4.

Preferably, according to Claims 2 and 5 respectively, said composite material described in Claim 1 and the methods of Claims 3 and 4 respectively are characterized in that at least one of said outer member and said inner member is of metal and the other member is of fluororesin.

When manufacturing the composite material according to the invention by the method for obtaining the same according to the invention, it is possible to easily mount the inner member onto the outer member to form a secure integral construction, thereby eliminating the disadvantages of needing any special techniques and apparatuses and thus increasing the manufacturing cost.

### Brief Description of the Drawings

For a better understanding of the present invention, the scope of which will be pointed out in the appended claims, reference is made to the following detailed descriptions of exemplary embodiments thereof, taken in conjunction with the accompanying drawings, in which:
Fig.1 is a partly broken-out perspective view of an embodiment of composite material according to the invention used in a non-lubricant bearing;
Fig.2 is cross-sectional view of a part of the non-lubricant bearing shown in Fig.1;
Fig.3 is a longitudinal section view taken along the line A-A of Fig.2;
Fig.4 is a longitudinal section view showing a part of a molding apparatus for the composite material according to the invention;
Fig.5 is a large-scale cross-sectional view taken along line B-B of Fig.4 and showing the essential part of mold for the inner member of composite material according to the invention;
Fig.6 is a large-scale cross-sectional view of a part of a non-lubricant bearing wherein the inner member is inserted into the outer member in the first embodiment of the method for obtaining the composite material according to the invention;
Fig.7 is a cross-sectional view showing an example according to the second embodiment of the method wherein joining means is applied on the inner member of composite material;
Fig.8 is a cross-sectional view showing an example according to the second embodiment of the method wherein the inner member is inserted into the outer member;
Fig.9 is a cross-sectional view showing another example according to the second embodiment of the method wherein the joining means is applied on the inner member;
Fig. 10 is a longitudinal section view of heretofore known typical non-lubricant bearings;
Fig.11 is a perspective view for illustrating the manufacturing process of heretofore known composite material;
Fig.12 is a longitudinal section view of another non-lubricant bearing using the composite material shown in Fig.11;
Fig.13 is a cross-sectional view of non-lubricant bearing of Fig.12;
Fig.14 is a longitudinal section view of another non-lubricant bearing using other heretofore known composite material.

### Detailed Description of the preferred embodiment

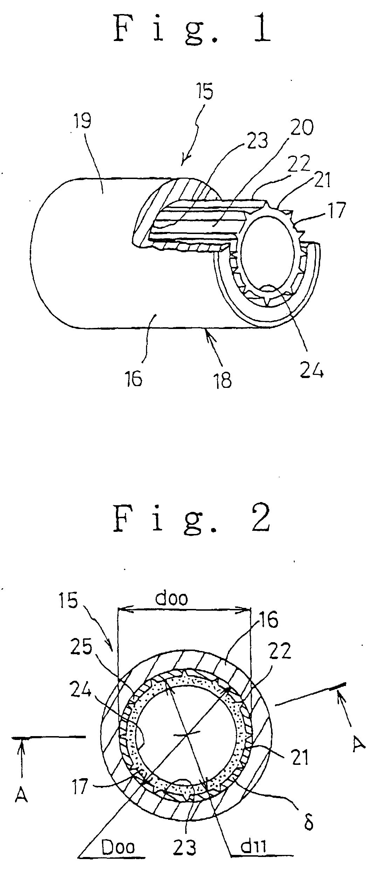

The embodiments of invention are described more in detail with reference to Figs.1-9 hereinbelow.

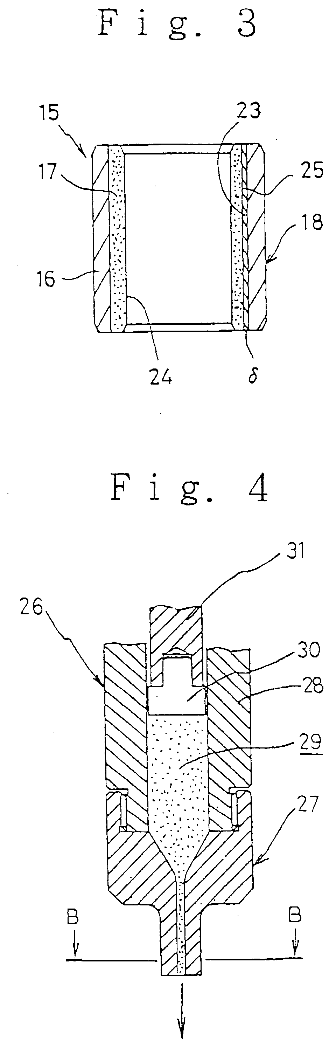

Figs.1-3 show an embodiment of non-lubricant bearing using the composite material according to the invention, Fig. 1 showing a partly broken-out perspective view of a part of said non-lubricant bearing, Fig.2 a cross-sectional view thereof and Fig.3 a longitudinal section view thereof taken along A-A line of Fig.2.

As shown in these figures, the non-lubricant bearing 15 is made from composite material 18 consisting of outer member 16 and inner member 17 joined together. Said outer member 16 is formed into a cylindrical form from any desired metal materials 19 such as stainless steal in this embodiment. Said inner member 17 is formed into substantially cylindrical form from fluororesin layer 20 such as PTFE with or without a suitable quantity of filler or fillers blended therein for the purpose of increasing its friction resistance, said fillers being for example glass fiber, carbon, graphite, molybdenum, carbon-fiber and the like or their combinations. A suitable gap δ is formed between the inner surface 23 of outer member 16 and the outer surface of inner member 17 as shown in Fig.2. Further, a plurality, for example 12 in this embodiment, of projections 22 each extending in the axial direction and having a cross section of triangle protruding outward in the radial direction are formed on the outer surface 21 of said inner member 17. The maximum outer diameter d00 of a circle taken along the apexes of said triangles of said protrusions 22 is substantially the same as the inner diameter D00 of the inner surface 23 of said outer member 16. A surface 24 for relative movement such as rotation, sliding and oscillation with respect to shaft not shown and the like is provided on the inner surface of said inner member 17. Further, said gap δ is filled with joining means 25 such as adhesives, PTFE resin in this embodiment. This joining means 25 secures said outer member 16 and inner member 17 together to form a solid structure of composite material 18. The cross section of said projections 22 is not limited to a triangle, but can be semi-circular. A plurality of projections 22 are used herein,but the number thereof is not limited to any specific number.

The first embodiment of the process for obtaining the composite material as described above is now explained with reference to Figs.4-6.

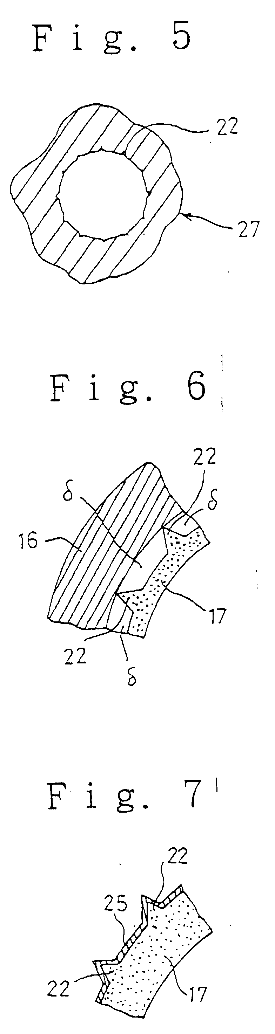

Fig.4 is a longitudinal section view showing a part of a molding apparatus of the inner member, Fig. 5 an enlarged cross-sectional view taken along line B-B of Fig.4, and Fig. 6 an enlarged cross-sectional view of a part of outer member and inner member assembled together, respectively.

First, the outer member 16 is formed into a pipe of long length in the order of 2.5 m having outer diameter 4.1 mm and inner diameter D00 of 3 mm or a bit larger through any well known process, for example by drawing suitable material such as seamless pipe or a seamed pipe of stainless steal and the like.

Secondly, the inner member 17 is made by a paste extruding process through a suitable molding apparatus 26 and mold 27 as shown in Fig.4 and Fig.5. More specifically, the inner member 17 is manufactured by extruding fluororesin 20 charged into cylinder 28 in the arrow direction as shown in Fig.4 by means of ram head 39 of a ram 31 thereby to form a round bar member having a length of 2.5 m, diameter d11 of its outer surface 21 a little smaller than 3 mm and 12 axial projections 22 distributed on its outer surface and equally spaced in the circumferential direction, said projections having each a triangular cross section of 0.1 mm height and having the maximum outer diameter d00 substantially equal to said inner diameter D00 of said outer member 16.

The length of the outer member 16 and the inner member 17 has been described above in the order of 2.5m for the sake of adapting them to the length of material feeder of machine tool such as automatic lathe, but it is not limited to the length of 2.5m.

For inserting said inner member 17 into said outer member 16, any suitable surface treatment such as etching is first applied on said inner member 17 and the latter member 17 is inserted into the outer member 16, while the inner surface 23 of the outer member 16 being kept in contact with the apexes of triangular cross section of respective projections 22 provided on the outer surface 21 of the inner member 17. Since the inner surface 23 of the outer member 16 has substantially the same diameter as that of the maximum outer diameter of the projections 22, while a suitable gap δ is provided between said inner surface 23 and the outer surface 21 of the inner member 17, the inserting operation can be easily carried out. By using said projections 22 of triangular cross section as a part of insert member, the contacting surfaces of both members are decreased and the apexes of said triangular cross section are a little crushed, so that the inserting resistance between the outer and inner members 16,17 is decreased in comparison with inserting operation of the heretofore known members. In another embodiment, a suitable gap or interference may be provided between the inner surface 23 of the outer member 16 and the apexes of projections 22 of the inner member 17, wherein diameter d11 of the outer surface 21 of the inner member 17 must be a little smaller than diameter D00 of the inner surface 23 of the outer member 16 for forming a gap δ.

With respect to the fixing operation between the inner member 17 and the outer member 16, a gap δ is provided between opposing surfaces of respective the inner member 17 and the outer member 16 as more clearly shown in Fig.6. A joining means 25 such as liquid adhesives having high fluidity and low viscosity, for example epoxy resins, is filled, if necessary under pressure, into said gap δ. The adhesives thus applied are set by heating the adhesives at a determined temperature arid for a determined time by means of suitable heating means such as thermostat not shown ,thereby to fix the inner member 17 and the outer member 16 with each other.

As described above, the inner member 17 and the outer member 16 can be easily fitted into an integral construction thereby to obtain a composite material 18 having long length, a high reliability and a high quality.

When adhering together the inner member 17 and the outer member 16 through heating thereof, the inner member 17 having round bar form and a higher thermal expansion coefficient is thermally expanded outwards in the direction of its diameter to adhere to the inner surface of the outer member 16 via the adhesive materials 25. When cooling the assembly, the inner member 17 and the outer member 16 are shrunk in the direction of diameter, wherein the inner member 17 is caused to largely shrink owing to its higher thermal expansion coefficient, which results in a stress in the joining portions of the outer member 16 and the inner member 17. Therefore, it is preferable to form the inner member 17 in round bar shape for obviating this disadvantage.

When assembling the inner member 17 and the outer member 16 described above according to the invention, any drawing operation is not used as in the case of the heretofore known processes, so that any camber in axial direction is not generated. Therefore, when continuously working, for example cutting the composite material 18 according to the invention on a working machine such as automatic lathe, the composite material 18 is not subject to vibration thereby to obtain a high working accuracy.

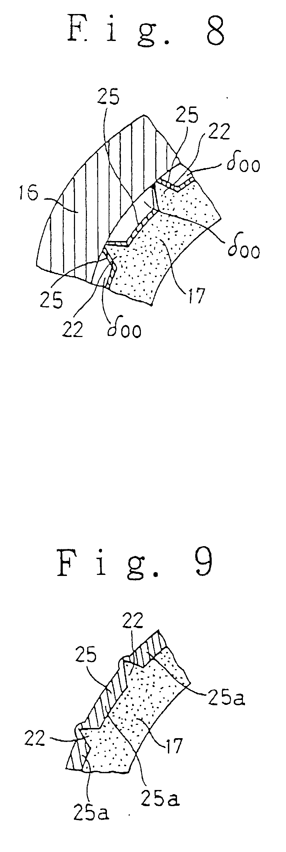

The second embodiment of the composite material according to the invention and its effect are now described with reference to Figs.7 and 8.

Fig.7 is a cross-sectional view showing a layer of adhesives applied on the outer surface of the inner member 17, and Fig.8 is the same view showing the part of non-lubricant bearing where the inner member 17 and the outer member 16 are fixed together.

According to this embodiment, a suitable well-known surface treatment such as etching for preparation of coating is first carried out on the outer surface 21 of the inner member 17 having a plurality of projections 22. Said outer surface 21 of the inner member 17 is then coated with a suitable joining means 25 as shown in Fig.7. After the coating of adhesives thus applied has been dried, the inner member 17 is inserted into the outer member 16 in the same manner as described with respect to the first embodiment and the assembly is heated in a suitable heating means not shown, such as thermostat, at a determined temperature and for a determined time period to set the adhesives thereby to fit the inner member 17 and the outer member 16 with each other.

Due to this embodiment wherein the inner member 17 is inserted into the outer member 16 after the coating of joining means 25 on the outer surface 21 of the inner member 17, the application of the joining means 25 can be made easier along with the effects obtained in the first embodiment. Further, since the joining means 25 is first dried to securely volatilize the volatile matter in the solvents contained in said joining adhesives thereby to have a good dried conditions thereof for inserting operation, it becomes possible to easily apply into narrow interstices said joining material 25 having a relatively low fluidity (high viscosity) which has been said difficult to penetrate into narrow interstices. The joining adhesives 25 are first dried as described above in the narrow interstices, then heated to melt and finally caused to set, so that the residue of solvent gas in the bottom area of interstices is prevented thereby to fit the inner member 17 and the outer member 16 with a sufficient joining force without generation of voids.

When inserting the inner member 17 into the outer member 16 while the inner surface 23 of the outer member 16 is kept in contact with the apexes of said projections 22 provided on the outer surface 21 of the inner member 17, the coating 25 on said apexes of the projections 22 may be removed. However, the removed portions of the coating 25 are relative small with respect to the diameter of the inner member 17, so that it can be neglected for the desired total joining force between the inner member and the outer member 16.

In this embodiment according to the invention, a gap δ00 may be formed between the surface of joining material 25 and the inner surface of the outer member 16. But, when the inner member 17 is made from fluororesin 20 as shown in Fig.8, it is possible to thermally expand the inner member 17 by heating the same with a suitable heating means not shown such as a thermostat at predetermined temperature and time period, thereby to cause the outer surface of the inner member 17 and the inner surface 23 of the outer member 16 to closely contact with each other by means of the joining material 25. Thus, a composite material 18 of long length having a sufficient joining force, secured integrality, high reliability and quality can be obtained.

Fig.9 is a cross-sectional view of a part of the inner member 17 wherein a joining material having a high viscosity and corresponding low fluidity is used.

When coating such a joining material, this joining material is applied on the inner member 17 in the manner such as to binding the neighbouring apexes of projections 22. When inserting then the inner member 17 into the outer member 16 while keeping the inner surface 23 of the outer member 16 in contact with the apexes of the projections 22, the portions of coating 25 on said apexes of projections 22 are removed, which renders this inserting operation a few more difficult, but the portions 25a of joining material which are located between neighboring apexes 22 are not removed, thereby to assure a sufficient joining force between the inner member 17 and the outer member 16.

Non-lubricant bearing 15 having a short length can be produced using the composite material 18 of long length as described above by working said composite material 18 on an automatic lathe equipped with automatic supplying devices through a series of working steps such as boring, beveling,cutting and the like so as to obtain inner diameter of 1.5 mm, outer diameter of 4 mm and length of 8 mm, thereby to produce non-lubricant bearing 15 having small diameter and fluororesin layer 20 as inner member 17 of small thickness. Since the thickness of said fluororesin layer 20 can be decreased, it is possible to achieve a rapid heat-transfer of heat (accumulated in the fluororesin 20 in use due to sliding movement between said layer 20 and shaft) to metal 19 thereby to improve the heat conductivity of layer 20 and to decrease the increase of temperature in said layer 20, so that the decrease of compression strength of the fluororesin layer 20 is prevented thereby to obtain non-lubricant bearing 15 which can resist the higher PV values.

Since the non-lubricant bearings 15 using fluororesin 20 according to the invention have lower frictional coefficient and can resist higher PV values as described above, the non-lubricant bearings 15 according to the invention used as tape guide roller rotated at high velocities can prevent such advantages as generation of stick slips, vibration and noises and falling of the inner member 17 out of the outer member 16 such as shown by the non-lubricant bearings 14 using polyacetal.

Further, fluororesin 20 can be made thinner, so that the variation of sizes of fluororesin 20 through its thermal expansion due to heat accumulation in use (caused by frictional sliding between fluororesin 20 and corresponding axle) is reduced securely as compared with the heretofore known bearings, so that the clearance between the non-lubricant bearings 15 and axle can also be reduced, thus bringing about higher bearing accuracy of this non-lubricant bearings 15.

As described above, the desired non-lubricant bearing 15 using the composite material 18 according to the invention can be efficiently produced with low manufacturing cost and higher productivity.

While the present invention has been described with reference to exemplary embodiments thereof, it will be appreciated by those skilled in the art that variations and modifications may be made thereto without departing from the scope of the invention as defined in the claims.

For example, although metal 19 and fluororesin 20 are used respectively for the outer member 16 and the inner member 17, it is possible to use fluororesin 20 for the outer member 16 and metal 19 for the inner member 17. Further, the material for the inner member 17 and the outer member 16 can be other than those described above, for example high polymeric materials such as for example the combination of ceramics and polyamide resin, for adapting to the use thereof.

The outer member 16 and the inner member 17 can be assembled first by inserting loosely the inner member 17 into the outer member 16, then drawing the assembly thus obtained on the outer member 16 and lastly by adhering these members together through suitable adhesives.

Further, the projections 22 can be formed in a spiral shape or can be planted on a part of the surface of the inner member 17.

## Claims

1. A cylindrical composite bearing material for the manufacture of a plurality of bearings of short length, said material consisting of:
an inner member (17) having an outer surface (21); an annular outer member (16) having an inner surface (23);
in which said inner surface (23) and said outer surface (21) are opposed with a gap (δ) therebetween which is small compared to the radius of curvature of the inner surface (23) of the outer member (16); and in which one of said outer surface (21) of said inner member (17) and said inner surface (23) of outer member (16) is provided with a plurality of projections (22), projecting towards the other surface and extending substantially all the way across the gap between the inner member (17) and the outer member (16) so as to support the inner member relative to said outer member ;
wherein the inner and outer members (17, 16) are joined together by a joining means (25) placed in said gap between said inner surface (23) and said outer surface (21) and wherein the radial extent of the projections (22) is small compared to the radius of curvature of the inner surface (23) of the outer member (16).

2. A bearing material as claimed in Claim 1 characterised in that at least one of said outer member and said inner member is of metal and the other member is of fluororesin.

3. A method of making a cylindrical composite bearing material for the manufacture of a plurality of bearings of short length, said material consisting of an inner member (17) fixed into an annular outer member (16) comprising the steps of:
forming independently said outer member (16) and said inner member (17);
forming a plurality of projections (22) on at least one of an inner surface (23) of said outer member (16) and an outer surface (21) of said inner member (17), whereby
said projections (22) are small in radial extent compared to the radius of curvature of the inner surface (23) of the outer member (16) and are formed so that upon insertion of the inner member (17) into the outer member (16) the projections extend substantially all the way across the gap (6) between the inner surface (23) of the outer member (16) and the outer surface (21) of the inner member;
inserting said inner member (17) into said outer member (16) such that there is a gap (δ) between the outer surface (21) of the inner member (17) and the inner surface (23) of the outer member (16) which is small compared to the radius of curvature of the inner surface (23) of the outer member (16); and
inserting a joining means (25) between said inner member (17) and said outer member (16) in order to join said inner and outer members.

4. A method of making a cylindrical composite bearing material for the manufacture of a plurality of bearings of short lengths, said material consisting of an inner member (17) fixed into an annular outer member (16) comprising the steps of:
forming independently said outer member (16) and said inner member (17);
forming a plurality of projections (22) on at least one of an inner surface (23) of said outer member (16) and an outer surface (21) of said inner member (17), whereby said projections (22) are small in radial extent compared to the radius of curvature of the inner surface (23) of the outer member (16) and are formed so that upon insertion of the inner member (17) into the outer member (16) the projections extend substantially all the way across the gap (δ) between the inner surface (23) of the outer member (16) and the outer surface (21) of the inner member (17);
coating joining means on at least one of the inner surface of the outer member and the outer surface of the inner member; and thereafter
inserting said inner member together with the joining means into said outer member such that there is a gap (δ) between the outer surface (21) of the inner member (17) and the inner surface (23) of the outer member (16) which is small compared to the radius of curvature of the inner surface (23) of the outer member (16) and said inner and outer members are joined into an integral structure by means of said joining means located between said members.

5. A method as claimed in any one of Claims 4 to 6 characterised in that at least one of said outer and inner members is of metal and the other member is of fluororesin.

## Patentansprüche

1. Ein zylindrisches zusammengesetztes Lagermaterial zur Herstellung einer Vielzahl kurzer Lager, wobei das Material aus folgendem besteht:
einem Innenteil (17) mit einer Außenfläche (21); einem ringförmigen Außenteil (16) mit einer Innenfläche (23) ;
in dem die Innenfläche (23) und die Außenfläche (21) einander mit einer dazwischenliegenden Lücke (δ) gegenüberliegen, die im Vergleich zum Kurvenradius der Innenfläche (23) des Außenteils (16) klein ist; und in dem entweder die Außenfläche (21) des Innenteils (17) oder die Innenfläche (23) des Außenteils (16) mit einer Vielzahl von Vorsprüngen (22) versehen ist, die in Richtung auf die andere Fläche vorstehen und sich im wesentlichen ganz über die Lücke zwischen dem Innenteil (17) und dem Außenteil (16) erstrecken, um das Innenteil im Verhältnis zum Außenteil zu halten; wobei das Innen- und das Außenteil (17, 16) mittels eines Verbindungsmittels (25) miteinander verbunden sind, das in die Lücke zwischen der Innenfläche (23) und der Außenfläche (21) plaziert ist, und wobei das Ausmaß der Vorsprünge (22) in radialer Richtung im Vergleich zum Kurvenradius der Innenfläche (23) des Außenteils (16) klein ist.

2. Lagermaterial gemäß Anspruch 1, dadurch gekennzeichnet, daß zumindest eins der Außen- und Innenteile aus Metall und das andere Teil aus Fluorharz besteht.

3. Ein Verfahren zur Herstellung eines zylindrischen zusammengesetzten Lagermaterials zur Herstellung einer Vielzahl kurzer Lager, wobei das Material aus einem Innenteil (17), das in einem ringförmigen Außenteil (16) befestigt ist, besteht, welches die folgenden Schritte umfaßt:
das Außenteil (16) und das Innenteil (17) unabhängig voneinander herzustellen;
eine Vielzahl von Vorsprüngen (22) auf zumindest der Innenfläche (23) des Außenteils (16) oder der Außenfläche (21) des Innenteils (17) auszubilden; wobei das Ausmaß der Vorsprünge (22) in radialer Richtung im Vergleich zum Kurvenradius der Innenfläche (23) des Außenteils (16) klein ist und diese so ausgebildet sind, daß beim Einsetzen des Innenteils (17) in das Außenteil (16) die Vorsprünge sich im wesentlichen ganz über die Lücke (δ) zwischen der Innenfläche (23) des Außenteils (16) und der Außenfläche (21) des Innenteils erstrecken;
das Innenteil (17) so in das Außenteil (16) einzusetzen, daß zwischen der Außenfläche (21) des Innenteils (17) und der Innenfläche (23) des Außenteils (16) eine Lücke (δ) entsteht, die im Vergleich zum Kurvenradius der Innenfläche (23) des Außenteils (16) klein ist; und
ein Verbindungsmittel (25) zwischen dem Innenteil (17) und dem Außenteil (16) einzusetzen, um die Innen- und Außenteile zu verbinden.

4. Ein Verfahren zur Herstellung eines zylindrischen zusammengesetzten Lagermaterials zur Herstellung einer Vielzahl kurzer Lager, wobei das Material aus einem Innenteil (17), das in einem ringförmigen Außenteil (16) befestigt ist, besteht, welches die folgenden Schritte umfaßt:
das Außenteil (16) und das Innenteil (17) unabhängig voneinander herzustellen;
eine Vielzahl von Vorsprüngen (22) auf zumindest der Innenfläche (23) des Außenteils (16) oder der Außenfläche (21) des Innenteils (17) auszubilden, wobei das Ausmaß der Vorsprünge (22) in radialer Richtung im Vergleich zum Kurvenradius der Innenfläche (23) des Außenteils (16) klein ist und diese so ausgebildet sind, daß beim Einsetzen des Innenteils (17) in das Außenteil (16) die Vorsprünge sich im wesentlichen ganz über die Lücke (δ) zwischen der Innenfläche (23) des Außenteils (16) und der Außenfläche (21) des Innenteils (17) erstrecken;
das Verbindungsmittel auf zumindest die Innenfläche des Außenteils oder die Außenfläche des Innenteils als Beschichtung aufzutragen; und danach
das Innenteil zusammen mit dem Verbindungsmittel so in das Außenteil einzusetzen, daß zwischen der Außenfläche (21) des Innenteils (17) und der Innenfläche (23) des Außenteils (16) eine Lücke (δ) entsteht, die im Vergleich zum Kurvenradius der Innenfläche (23) des Außenteils (16) klein ist, und daß die Innen- und Außenteile mittels des zwischen den Teilen befindlichen Verbindungsmittels zu einer zusammenhängenden Struktur verbunden werden.

5. Verfahren gemäß einem der Ansprüche 3 bis 4, dadurch gekennzeichnet, daß zumindest eins der Außen- und Innenteile aus Metall und das andere Teil aus Fluorharz ist.

## Revendications

1. Un matériau composite pour palier cylindrique pour l'usinage d'une pluralité de paliers de courte longueur, ledit matériau consistant en:
un élément interne (17) ayant une surface externe (21);
un élément externe annulaire (16) ayant une surface interne (23);
dans lequel ladite surface interne (23) et ladite surface externe (21) sont opposées et ont un espace (δ) entre elles qui est petit comparé au rayon de courbure de la surface interne (23) de l'élément externe (16); et dans lequel une de ladite surface externe (21) du dit élément interne (17) et de ladite surface interne (23) du dit élément externe (16) est pourvue d'une pluralité de projections (22), projetant vers l'autre surface et s'étendant considérablement à travers tout l'espace entre l'élément interne (17) et l'élément externe (16) de façon à supporter l'élément interne par rapport au dit élément externe; dans lequel les éléments interne et externe (17, 16) sont joints ensemble par un moyen de liaison (25) placé dans ledit espace entre ladite surface interne (23) et ladite surface externe (21) et dans lequel l'étendue radiale des projections (22) est petite comparée au rayon de courbure de la surface interne (23) de l'élément externe (16).

2. Un matériau pour palier selon la revendication 1 caractérisé en ce qu'au moins un du dit élément externe et du dit élément interne est en métal et l'autre élément est en fluororésine.

3. Un procédé de fabrication d'un matériau composite pour palier cylindrique pour l'usinage d'une pluralité de paliers de courte longueur, ledit matériau consistant en un élément interne (17) fixé dans un élément externe annulaire (16) comprenant les étapes consistant à:
former indépendamment ledit élément externe (16) et ledit élément interne (17);
former une pluralité de projections (22) sur au moins une d'une surface interne (23) du dit élément externe (16) et une surface externe (21) du dit élément interne (17); par lequel lesdites projections (22) sont petites en étendue radiale comparées au rayon de courbure de la surface interne (23) de l'élément externe (16) et sont formées de telle manière que lors de l'insertion de l'élément interne (17) dans l'élément externe (16) les projections s'étendent considérablement à travers tout l'espace (δ) entre la surface interne (23) de l'élément externe (16) et la surface externe (21) de l'élément interne;
insérer ledit élément interne (17) dans ledit élément externe (16) de manière à ce qu'il y ait un espace (δ) entre la surface externe (21) de l'élément interne (17) et la surface interne (23) de l'élément externe (16) qui est petit comparé au rayon de courbure de la surface interne (23) de l'élément externe (16); et
insérer un moyen de liaison (25) entre ledit élément interne (17) et ledit élément externe (16) de manière à joindre lesdits éléments interne et externe.

4. Un procédé de fabrication d'un matériau composite pour palier cylindrique pour l'usinage d'une pluralité de paliers de courtes longueurs, ledit matériau consistant en un élément interne (17) fixé dans un élément externe annulaire (16) comprenant les étapes consistant à:
former indépendamment ledit élément externe (16) et ledit élément interne (17);
former une pluralité de projections (22) sur au moins une d'une surface interne (23) du dit élément externe (16) et une surface externe (21) du dit élément interne (17), par lequel lesdites projections (22) sont petites en étendue radiale comparées au rayon de courbure de la surface interne (23) de l'élément externe (16) et sont formées de telle manière que lors de l'insertion de l'élément interne (17) dans l'élément externe (16) les projections s'étendent considérablement à travers tout l'espace (δ) entre la surface interne (23) de l'élément externe (16) et la surface externe (21) de l'élément interne (17);
revêtir le moyen de liaison sur au moins une parmi la surface interne de l'élément externe et la surface externe de l'élément interne; et par la suite
insérer ledit élément interne ainsi que le moyen de liaison dans ledit élément externe de sorte qu'il y ait un espace (δ) entre la surface externe (21) de l'élément interne (17) et la surface interne (23) de l'élément externe (16) qui est petit comparé au rayon de la courbure de la surface interne (23) de l'élément externe (16) et lesdits éléments interne et externe sont joints en une structure intégrale au moyen du dit moyen de liaison situé entre lesdits éléments.

5. Un procédé selon l'une quelconque des revendications 3 à 4 caractérisé en ce qu'au moins un des dits éléments externe et interne est en métal et l'autre élément est en fluororésine.
